# FASCICULE DE BREVET EUROPEEN

(11) **EP 2 640 591 B1**
(45) Date de publication et mention de la délivrance du brevet: **02.09.2015**
(21) Numéro de dépôt: 11784480.3
(22) Date de dépôt: 14.11.2011
(51) Int. Cl.: B60K 11/08

(54) **DISPOSITIF DE REFROIDISSEMENT A GUIDE D'AIR POUR RADIATEUR DE MOTEUR AUTOMOBILE**
KÜHLVORRICHTUNG MIT LUFTFÜHRUNG FÜR EINEN KÜHLER EINES AUTOMOTORS
COOLING DEVICE HAVING AIR GUIDE FOR A RADIATOR OF AN AUTOMOBILE ENGINE

(30) Priorité: 17.11.2010 FR 1059441
(43) Date de publication de la demande: 25.09.2013
(73) Titulaire: Renault S.A.S., 92100 Boulogne-Billancourt (FR)
(72) Inventeur: BIGNON, Yannick, F-92350 Le Plessin Robinson (FR); FLANDIN, Michael, F-28410 Broue (FR)
(86) Numéro de dépôt international: PCT/EP2011/070073
(87) Numéro de publication internationale: WO 2012/065954

(56) Documents cités:
- EP-A2- 2 248 693

## Description

La présente invention concerne un dispositif de refroidissement à guide d'air pour radiateur de moteur de véhicule, et notamment un dispositif pouvant incorporer un dispositif d'occultation à volets mobiles.

On connaît divers dispositifs de refroidissement comportant des volets mobiles, de type jalousie, à fermeture pilotée pour pouvoir gérer les émissions en CO₂. on sait en effet que les entrées d'air sur un bouclier avant dégradent le coefficient de traînée aérodynamique SCx et augmentent donc l'émission de CO₂ du véhicule. Les constructeurs ont donc cherché à positionner des volets mobiles sur le circuit d'air mais le positionnement de ces volets mobiles pose de nombreux problèmes, dans l'environnement compact d'un avant de véhicule où des nombreuses autres exigences doivent être respectées, notamment en matière de chocs, et notamment de chocs avec un piéton. Ainsi, un volet mobile placé dans ou trop près de la grille d'entrée d'air n'est pas satisfaisant : le volet risque d'être abîmé au moindre choc, avec des coûts de remplacement importants pour la réparation. Un volet porté par ou intégré à la face avant technique du véhicule pose des problèmes de fragilité et par ailleurs se prête mal à une construction standardisée pour divers modèles dans la mesure où la face avant technique est très liée au design du véhicule, entièrement en tôle et onéreuse.

On connaît par le document EP 2080658 un dispositif de refroidissement de radiateur, destiné à être monté à l'avant d'un véhicule automobile entre un radiateur et une peau de bouclier munie d'une entrée d'air, du type comportant depuis ladite entrée d'air jusqu'audit radiateur un guide d'air fixé à des parties structurelles du véhicule et logeant un dispositif à volets d'occultation de l'air arrivant sur le radiateur en fonction des besoins. Selon ce document, le guide d'air et ses moyens d'occultation sont adaptés pour participer à l'absorption de l'énergie en cas de choc, ce qui est nécessaire dans la mesure où les moyens d'occultation sont placés sensiblement au niveau de l'entrée d'air pratiquée dans le bouclier, sans recul en cas de choc. Le dispositif d'occultation est intégré dans les parois du guide d'air, et celui-ci prend appui contre l'intérieur de la peau du bouclier avant et comporte des surfaces destinées à s'appuyer en cas de choc à l'avant et au-dessus de la poutre transversale de choc de la structure du véhicule. Cette construction présente l'inconvénient d'être spécifiquement liée à chaque modèle de véhicule et d'exposer les volets d'occultation à tous les chocs, y compris à basse vitesse.

Le document EP 22 48 693 sert le base pour le préambule de la revendication 1.

L'invention a pour but de proposer un dispositif de refroidissement de radiateur amélioré, avec une construction de guide d'air qui permet une adaptation plus facile à divers modèles de véhicules.

L'invention atteint son but grâce à un dispositif de refroidissement de radiateur selon la revendication 1.

Selon l'invention, les deux parties respectivement avant et arrière sont séparées et munies de moyens de fixation de l'une à l'autre, grâce à quoi il est plus facile d'accéder à la zone de réception pour disposer, le cas échéant, le dispositif à volets d'occultation.

Selon l'invention, le dispositif à volets d'occultation est sous forme d'une cassette autonome amovible qu'on peut à volonté placer ou non dans le guide d'air, lors de la construction du véhicule, en fonction des impératifs de refroidissement. La cassette comporte un actionneur de volets avantageusement déporté latéralement, en dehors des entrées d'air, ce qui permet une prise d'air maximale et limite les risques de collision entre l'actionneur et le radiateur situé derrière. La partie arrière du guide d'air comprend donc avantageusement une ouverture sur le côté pour constituer le passe-câble de l'alimentation de l'actionneur.

Avantageusement lesdits moyens de fixation dudit dispositif à volets d'occultation dans ladite partie arrière sont confondus avec les moyens de fixation de la partie arrière et de la partie avant l'une à l'autre, de sorte qu'il suffit, une fois le dispositif à volets d'occultation positionné dans la partie arrière, de placer et fixer la partie avant pour que le dispositif à volets d'occultation se trouve lui-même bloqué en position. Autrement dit, la fixation des parties avant et arrière de guide d'air emprisonne la cassette à volets pilotés entre les deux parties par l'intermédiaire de butées.

Ces moyens de fixations peuvent notamment être par vissage ou par clippage.

De manière pratique, il est prévu dans la partie arrière du guide d'air une zone d'appui sur laquelle le dispositif à volets d'occultation peut être mis en butée lors de la fixation de la partie avant du guide d'air sur la partie arrière, ladite partie avant comportant également une zone d'appui sur le dispositif à volets d'occultation.

De manière avantageuse, la partie arrière du guide d'air qui loge le dispositif à volets d'occultation comporte à l'avant une zone d'appui pour l'arrière de la partie avant, alignée sensiblement sur la face avant du dispositif à volets d'occultation, de sorte que si le dispositif à volets d'occultation n'est pas présent, la position d'assemblage de la partie avant sur la partie arrière est sensiblement la même que si le dispositif à volets d'occultation est présent. Il est ainsi possible d'utiliser la même partie arrière et la même partie avant de guide d'air, que l'on choisisse de mettre ou non le dispositif à volets d'occultation.

De manière avantageuse, la partie arrière du guide d'air et le dispositif à volets d'occultation sont identiques pour plusieurs modèles de véhicule présentant une architecture de moteur similaire, cette standardisation étant rendue possible par la structure en deux parties du guide d'air. Au contraire, la partie avant du guide d'air peut être spécifique pour chaque modèle, en fonction du design du véhicule.

Avantageusement, la partie avant du guide d'air comprend des lèvres d'étanchéité pour s'appliquer contre la peau du bouclier.

Avantageusement, la partie arrière du guide d'air comprend deux caissons respectivement inférieur et supérieur débouchant dans un collecteur adapté à la taille du radiateur, les deux caissons chevauchant de part et d'autre la poutre de choc.

Avantageusement, le dispositif à volets d'occultation est disposé dans le caisson inférieur, parce que c'est en principe l'entrée d'air principale, et ce, sensiblement à l'aplomb de la poutre de choc, ce qui lui assure une bonne résistance aux chocs, notamment aux chocs avant à moins de 16 km/h (chocs Danner).

Avantageusement, la partie arrière du guide d'air est fixée à la poutre transversale de choc et/ou la partie inférieure du bouclier.

L'invention permet d'améliorer les émissions en CO₂ d'un véhicule grâce à un module facultatif de volets mobiles qui s'intègre dans une architecture existante, selon une solution économique dans la mesure où la partie arrière du guide d'air et la cassette à volets sont standardisés. La cassette est optionnelle et on peut ne pas en équiper les véhicules destinés à être commercialisé dans les pays où la réglementation ne taxerait pas les émissions en CO₂: dans ce cas néanmoins, on utilise le guide d'air avec ses parties avant et arrière, en bouchant simplement le trou latéral de sortie du câble de pilotage ; l'étanchéité globale du guide d'air selon l'invention est améliorée par rapport aux véhicules classiques sans volets pilotés.

Par ailleurs, le module à volets mobiles étant préparé en atelier de préparation, son installation ne modifie pas sensiblement le temps de fabrication sur la chaîne de montage principale.

D'autres caractéristiques et avantages de l'invention ressortiront de la description suivante de plusieurs exemples de réalisation. Il sera fait référence aux dessins annexés sur lesquels :
La figure 1 est une vue en perspective en écorché de l'avant d'un véhicule dans lequel l'invention peut s'implanter,
La figure 2 est une en perspective du guide d'air arrière conforme à l'invention et de la cassette à volets mobiles qu'il loge dans sa partie inférieure,
Les figures 3 et 4 sont des vues en perspective respectives du guide d'air arrière et de la cassette de la figure 2,
La figure 5 est une vue schématique en coupe verticale longitudinale d'une variante de réalisation du dispositif conforme à l'invention,
La figure 6 montre en éclaté un mode particulier de réalisation de l'implantation de la cassette à volets mobiles dans le guide d'air.
La figure 7 montre en coupe un autre mode particulier de réalisation de l'implantation de la cassette à volets mobiles dans le guide d'air.

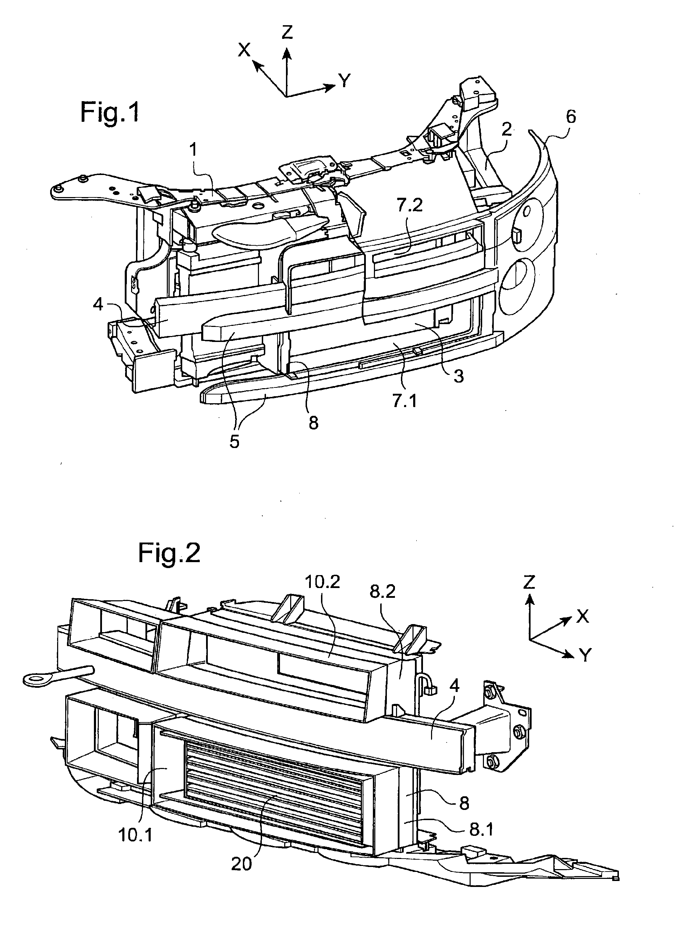

La figure 1 illustre l'avant du compartiment moteur à l'avant d'un véhicule d'un type classique auquel l'invention s'applique. D'arrière en avant, on trouve :
- la façade technique avant 1 servant de support vertical à un certain nombre d'organes et fixée solidement sur des éléments structurels du châssis, par exemple sur des pièces liées aux longerons latéraux 2.
- le radiateur vertical 3, fixé avec débattement sur la façade technique avant 1.
- la poutre de choc 4, transversale et reliée de manière non représentée à des éléments structurels du châssis, en principe l'avant des longerons 2. La poutre de choc barre l'espace avant du radiateur 3.
- l'absorbeur de choc 5 du bouclier 6, ici sous forme de deux profilés transversaux inférieur et supérieur. Le profilé supérieur est situé ici devant la poutre de choc 4. Le bouclier 6 comporte comme il est usuel une face avant, des crosses latérales, et une partie inférieure de spoiler qui se prolonge en arrière sous l'avant du véhicule.

Dans le bouclier 6, une ouverture (au moins), et ici deux ouvertures 7.1 et 7.2, permettent l'entrée de l'air de refroidissement qui est ensuite dirigé vers le radiateur 3 par un guide d'air adapté 8. En pratique, l'entrée 7.1 peut être l'entrée principale et l'entrée 7.2 peut être utilisée ou non.

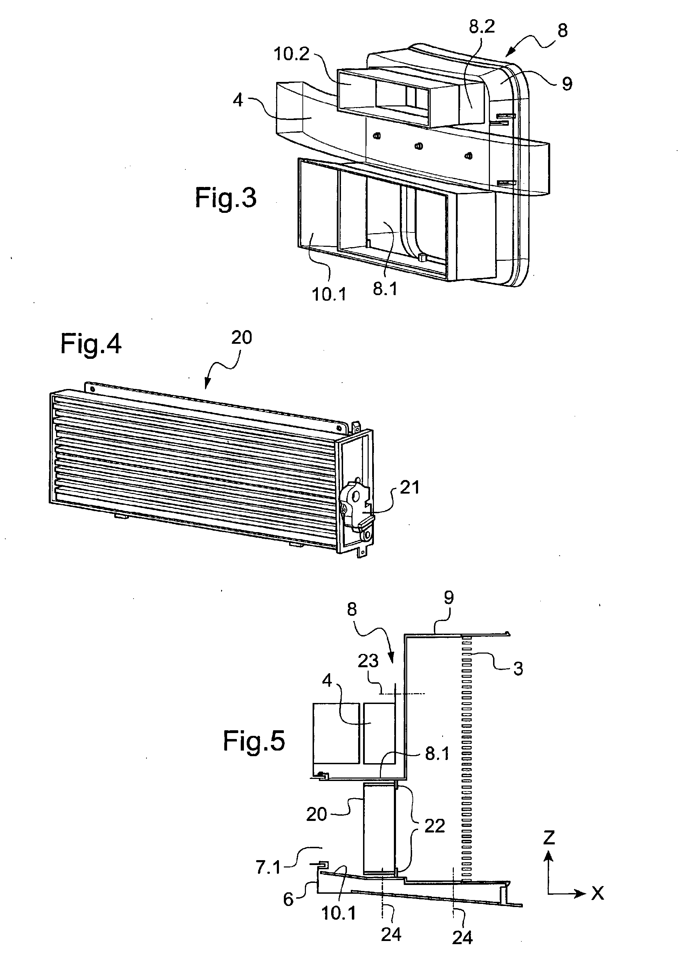

Comme on le voit bien sur les figures 2, 3 et 5, du fait de la présence de la poutre de choc 4, le guide d'air 8 est avantageusement, dans le voisinage de ladite poutre, sous forme d'un caisson en U à cheval sur la poutre présentant une partie de passage inférieure en caisson 8.1 et une partie de passage supérieure en caisson 8.2 respectivement au-dessous et au-dessus de la poutre 4 et qui débouchent toutes deux en aval dans un collecteur commun 9 adapté à la surface du radiateur 3 devant lequel il est disposé avec des étanchéités convenables. Ces caissons 8.1, 8.2 et le collecteur 9 forment la partie arrière du guide d'air de l'invention, qui est complété en amont par un guide d'air avant destiné à confiner l'air de manière sensiblement étanche entre les entrées d'air 7.1 et 7.2 et la partie arrière 8.1, 8.2, 9, par exemple sous forme de caissons 10.1 et 10.2, pourvues d'une étanchéité approprié vers l'avant (cf. figures 2 et 3).

Selon l'invention, le guide d'air 8, en particulier sa partie inférieure 8.1, qui correspond à l'entrée principale 7.1 d'air, peut loger, grâce à des moyens de positionnement et de blocage adaptés, une cassette 20 à volets d'occultation mobiles commandés par un dispositif latéral de commande 21 (figures 2, 4 et 5). Une telle cassette peut être sous forme d'un rectangle comme on le voit sur la figure 4. Il est possible de prévoir aussi une autre cassette dans la partie supérieure 8.2 mais le débit plus faible qui la traverse ne le justifie pas nécessairement. Le dispositif latéral de commande 21 est alimenté par un câble non représenté passant dans une ouverture latérale également non représentée du caisson inférieur 8.1 du guide d'air.

On a représenté de manière schématique sur la figure 5 un mode de réalisation un peu différent, où l'on reconnaît la poutre 4 et le caisson inférieur 8.1 situé sous la poutre et débouchant dans un collecteur 9 de la taille du radiateur 3. Dans cette solution, le caisson supérieur a purement été omis. La cassette 20 de volets mobiles est logée dans le caisson unique inférieur 8.1 contre une butée périphérique 22 avec étanchéité à l'air. On a représenté par des traits 23, 24 les zones de fixation potentielles du guide d'air, à la poutre 4 (traits 23) et/ou, en partie inférieure, au spoiler du bouclier 6 (traits 24).

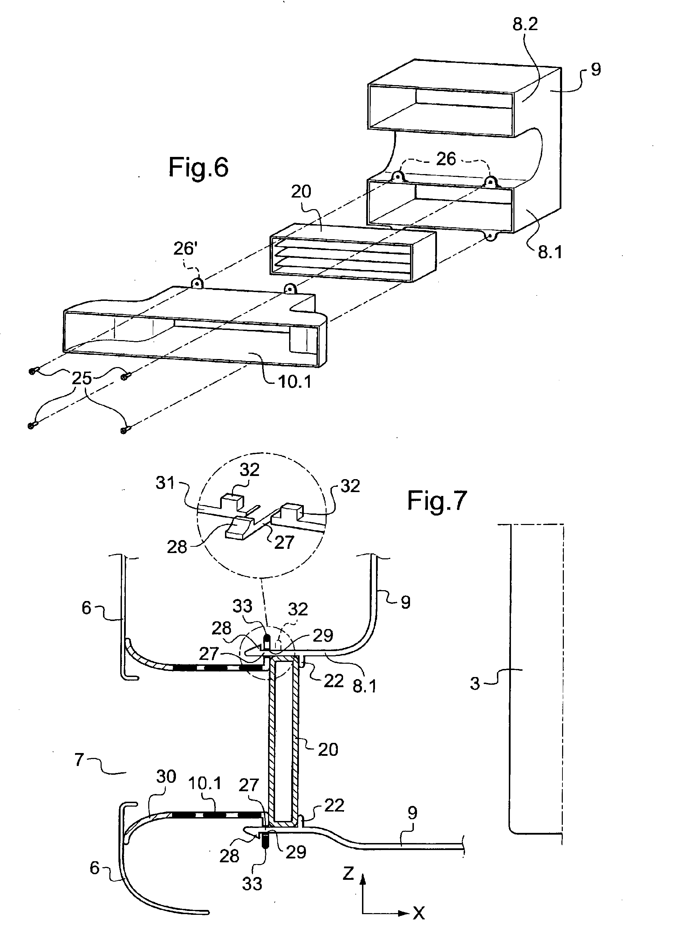

On voit sur la figure 6 la partie arrière d'une forme de réalisation préférée de guide d'air de l'invention, destinée à chevaucher la poutre de choc non représentée, et constituée des caissons inférieur et supérieur 8.1 et 8.2 et du collecteur arrière 9. Cet ensemble peut être d'une seule pièce ou en plusieurs pièces assemblées. Comme on l'a vu, le caisson 8.1 accueille la cassette 20 dont la forme est prévue pour rentrer exactement dans ledit caisson et venir s'appliquer contre une butée continue périphérique disposée sur la surface interne du caisson 8.1, le tout de manière à réaliser une étanchéité à l'air par simple appui. La cassette 20 est maintenue en position, sensiblement à l'aplomb de la poutre de choc, par la fermeture de l'ensemble par la partie avant 10.1 du guide d'air qui vient se fixer sur l'ensemble grâce à quatre vis autotaraudantes de fixation 25 qui passent dans des pattes 26' sur la partie avant 10.1 et vont se visser dans des fûts en matériau tendre 26 réalisés sur la surface extérieure près de quatre coins de la butée interne périphérique du caisson 8.1. Cette fixation maintient en appui étanche l'un sur l'autre à la fois le guide avant 10.1, la cassette 20 et le guide arrière 8.1. Selon l'invention, la partie arrière du guide d'air 8.1, 8.2, 9 est destinée à être la même pour tous les moteurs d'une même gamme de véhicule, et, selon les besoins, elle loge ou non une cassette 20 à volets mobile. La partie avant 10.1 est en revanche une pièce spécifique à chaque modèle de voiture, puisqu'elle dépend du design de celle-ci.

La figure 7 montre une solution par clippage au lieu d'être par vissage. On y retrouve la partie arrière du guide d'air 8.1, 9 en face du radiateur 3, avec la cassette 20 qui vient s'appliquer avec étanchéité contre la butée interne 22. La partie avant du caisson 8.1 comporte sur son bord 31 des pattes d'encliquetage flexibles 27 à crochets 28 dirigées vers l'avant et pouvant s'encliqueter dans des ouvertures 29 prévues sur un rebord transversal 33 formé à l'arrière de la pièce avant 10.1. Le bord 31 comporte par ailleurs, de part en part, des butées 32 destinées à bloquer vers l'arrière le rebord transversal 33 de la pièce avant 10.1 du guide d'air de manière que celle-ci conserve sensiblement la même position selon l'axe des X, que la cassette 20 soit présente ou non. Par ailleurs, la pièce 10.1 comporte à l'avant une lèvre souple 30 destinée à appuyer sur l'intérieur de la peau du bouclier 6, autour de l'ouverture 7 d'entrée d'air. Là encore, la partie avant 10.1 est une pièce spécifique à chaque modèle de voiture, alors que la partie arrière est une partie commune à toute une gamme de modèles ayant une même architecture de moteur.

## Revendications

1. Dispositif de refroidissement de radiateur, destiné à être monté à l'avant d'un véhicule automobile entre un radiateur (3) et une peau de bouclier (6) munie d'une entrée d'air (7), du type comportant depuis ladite entrée d'air (7) jusqu'audit radiateur un guide d'air (8) fixé à des parties structurelles du véhicule, un dispositif (20) à volets mobiles d'occultation de l'air arrivant sur le radiateur (3) en fonction des besoins étant le cas échéant logé dans le guide d'air (8), **caractérisé en ce que** le guide d'air (8) comporte au moins une partie avant (10.1) et une partie arrière (8.1) séparées et munies de moyens (25) de fixation de l'une à l'autre, ladite partie arrière (8.1) étant fixée auxdites parties structurelles et comportant une zone de réception adaptée pour recevoir le cas échéant ledit dispositif à volets d'occultation (20), et **en ce qu'**il est prévu des moyens de fixation dudit dispositif à volets d'occultation (20) dans ladite partie arrière (8.1), le dispositif à volets d'occultation (20) étant sous forme d'une cassette autonome amovible qu'on peut à volonté placer ou non dans le guide d'air (8).

2. Dispositif selon la revendication 1, **caractérisé en ce que** lesdits moyens de fixation dudit dispositif à volets d'occultation (20) dans ladite partie arrière (8.1) sont confondus avec les moyens de fixation (25) de la partie arrière (8.1) et de la partie avant (10.1) l'une à l'autre.

3. Dispositif selon la revendication 1 ou 2, **caractérisé en ce qu'**il est prévu dans la partie arrière (8.1) du guide d'air une zone d'appui (22) sur laquelle le dispositif à volets d'occultation (20) peut être mis en butée lors de la fixation de la partie avant (10.1) du guide d'air sur la partie arrière (8.1), ladite partie avant (10.1) comportant également une zone d'appui sur le dispositif à volets d'occultation (20).

4. Dispositif selon l'une quelconque des revendications 1 à 3, **caractérisé en ce que** la partie arrière (8.1) du guide d'air qui loge le dispositif à volets d'occultation (20) comporte à l'avant une zone d'appui (32) pour l'arrière de la partie avant (10.1), alignée sensiblement sur la face avant du dispositif à volets d'occultation (20), de sorte que si le dispositif à volets d'occultation (20) n'est pas présent, la position d'assemblage de la partie avant (10.1) sur la partie arrière (8.1) est sensiblement la même que si le dispositif à volets d'occultation (20) est présent.

5. Dispositif selon l'une quelconque des revendications 1 à 4, **caractérisé en ce que** la partie avant (10.1) du guide d'air comprend des lèvres d'étanchéité (30) pour s'appliquer contre la peau du bouclier (6).

6. Dispositif selon l'une quelconque des revendications 1 à 5, **caractérisé en ce que** la partie arrière du guide d'air comprend deux caissons respectivement inférieur (8.1) et supérieur (8.2) débouchant dans une collecteur (9) adapté à la taille du radiateur (3), les deux caissons (8.1, 8.2) chevauchant de part et d'autre la poutre de choc (4).

7. Dispositif selon la revendication 6, **caractérisé en ce que** le dispositif à volets d'occultation (20) est disposé dans le caisson inférieur (8.1).

## Patentansprüche

1. Kühlerkühlvorrichtung, die dazu bestimmt ist, an die Frontseite eines Kraftfahrzeugs zwischen einem Kühler (3) und einer Frontstoßfängerhaut (6), die mit einem Lufteintritt (7) des Typs versehen ist, der von dem Lufteintritt (7) bis zu dem Kühler eine Luftführung (8) aufweist, die an Strukturteilen des Fahrzeugs befestigt ist, montiert zu werden, wobei eine Vorrichtung (20) mit beweglichen Verschlussklappen der Luft, die auf dem Kühler (3) in Abhängigkeit von den Erfordernissen ankommt, gegebenenfalls in der Luftführung (8) untergebracht ist, **dadurch gekennzeichnet, dass** die Luftführung (8) mindestens einen vorderen Teil (10.1) und einen hinteren Teil (8.1) aufweist, die voneinander getrennt und mit Mitteln (25) zum Befestigen aneinander versehen sind, wobei der hintere Teil (8.1) an den Strukturteilen befestigt ist und eine Aufnahmezone aufweist, die angepasst ist, um gegebenenfalls die Vorrichtung mit Verschlussklappen (20) aufzunehmen, und dass Befestigungsmittel der Vorrichtung mit Verschlussklappen (20) in dem hinteren Teil (8.1) vorgesehen sind, wobei die Verschlussklappenvorrichtung (20) die Form einer autonomen abnehmbaren Kassette hat, die man nach Belieben in der Luftführung (8) platzieren kann oder auch nicht.

2. Vorrichtung nach Anspruch 1, **dadurch gekennzeichnet, dass** die Befestigungsmittel der Verschlussklappenvorrichtung (20) in dem hinteren Teil (8.1) mit den Mitteln (25) zum Befestigen des hinteren Teils (8.1) und des vorderen Teils (10.1) aneinander zusammenfallen.

3. Vorrichtung nach Anspruch 1 oder 2, **dadurch gekennzeichnet, dass** in dem hinteren Teil (8.1) der Luftführung eine Auflagezone (22) vorgesehen ist, auf der die Verschlussklappenvorrichtung (20) beim Befestigen des vorderen Teils (10.1) der Luftführung auf dem hinteren Teil (8.1) zum Anschlagen gebracht werden kann, wobei der vordere Teil (10.1) auch eine Auflagezone auf der Verschlussklappenvorrichtung aufweist (20).

4. Vorrichtung nach einem der Ansprüche 1 bis 3, **dadurch gekennzeichnet, dass** der hintere Teil (8.1) der Luftführung, der die Verschlussklappenvorrichtung (20) aufnimmt, an der Vorderseite eine Auflagezone (32) für die Rückseite des vorderen Teils (10.1) aufweist, im Wesentlichen auf der Vorderseite der Verschlussklappenvorrichtung (20) ausgerichtet, so dass, wenn die Verschlussklappenvorrichtung (20) nicht vorhanden ist, die Zusammenfügeposition des vorderen Teils (10.1) auf dem hinteren Teil (8.1) im Wesentlichen dieselbe ist wie wenn die Verschlussklappenvorrichtung (20) vorhanden ist.

5. Vorrichtung nach einem der Ansprüche 1 bis 4, **dadurch gekennzeichnet, dass** der vordere Teil (10.1) der Luftführung Dichtlippen (30) aufweist, um gegen die Haut des Frontstoßfängers (6) anzuliegen.

6. Vorrichtung nach einem der Ansprüche 1 bis 5, **dadurch gekennzeichnet, dass** der hintere Teil der Luftführung zwei Kasten, jeweils einen unteren (8.1) und einen oberen (8.2) aufweist, die in einen Sammler (9) münden, der an die Größe des Kühlers (3) angepasst ist, wobei die zwei Kasten (8.1, 8.2) von beiden Seiten auf dem Aufprallträger (4) sitzen.

7. Vorrichtung nach Anspruch 6, **dadurch gekennzeichnet, dass** die Verschlussklappenvorrichtung (20) in dem unteren Kasten (8.1) eingerichtet ist.

## Claims

1. Radiator cooling device intended to be mounted at the front of a motor vehicle between a radiator (3) and a bumper skin (6) equipped with an air inlet (7), of the type comprising from said air inlet (7) as far as said radiator, an air guide (8) fixed to structural parts of the vehicle, a device (20) with mobile flaps for shutting off the air arriving at the radiator (3) as required being housed as appropriate in the air guide (8), **characterized in that** the air guide (8) comprises at least one front part (10.1) and a rear part (8.1), which are separate and fitted with means (25) of attaching one to another, said rear part (8.1) being fixed to said structural parts and comprising an accepting zone designed to accept, as appropriate, said shut-off flaps device (20), and **in that** means are provided for fixing said shut-off flaps device (20) in said rear part (8.1), the shut-off flaps device (20) being in the form of a removable standalone cassette that can be positioned inside the air guide (8) or not, as desired.

2. Device according to Claim 1, **characterized in that** said means of attaching said shut-off flaps device (20) into said rear part (8.1) are coincident with the means of attachment (25) of the rear part (8.1) and of the front part (10.1) one to the other.

3. Device according to Claim 1 or 2, **characterized in that** a bearing zone (22) against which the shut-off flaps device (20) can abut when the front part (10.1) of the air guide is being attached to the rear part (8.1) is provided in the rear part (8.1) of the air guide, said front part (10.1) likewise comprising a zone for bearing against the shut-off flaps device (20).

4. Device according to any one of Claims 1 to 3, **characterized in that** the rear part (8.1) of the air guide which houses the shut-off flaps device (20) comprises, at the front, a bearing zone (32) for the rear of the front part (10.1), which is more or less aligned with the front face of the shut-off flaps device (20) so that if the shut-off flaps device (20) is not present, the position in which the front part (10.1) is assembled with the rear part (8.1) is substantially the same as it is when the shut-off flaps device (20) is present.

5. Device according to any one of Claims 1 to 4, **characterized in that** the front part (10.1) of the air guide comprises sealing lips (30) for pressing against the skin of the bumper (6).

6. Device according to any one of Claims 1 to 5, **characterized in that** the rear part of the air guide comprises two box sections, respectively a lower (8.1) and an upper (8.2) box section, opening into a manifold (9) suited to the size of the radiator (3), the two box sections (8.1, 8.2) straddling the impact beam (4).

7. Device according to Claim 6, **characterized in that** the shut-off flaps device (20) is positioned in the lower box section (8.1).
